# EUROPEAN PATENT APPLICATION

(11) **EP 4 586 373 A1**
(43) Date of publication of application: **16.07.2025**
(21) Application number: 23872986.7
(22) Date of filing: 22.09.2023
(51) Int. Cl.: H01M 50/143, H01M 50/178, H01M 50/186, H01M 50/595, H01M 50/211, H01M 50/342

(54) **POUCH TYPE BATTERY CELL**

(30) Priority: 28.09.2022 KR 20220123603
(71) Applicant: LG Energy Solution, Ltd., Seoul 07335 (KR)
(72) Inventor: JUNG, Kitaek, Daejeon 34122 (KR); PARK, Jeonghoon, Daejeon 34122 (KR); HAN, Minhee, Daejeon 34122 (KR); PARK, Juhun, Daejeon 34122 (KR); HAN, Seungwon, Daejeon 34122 (KR)
(74) Representative: Plasseraud IP
(86) International application number: PCT/KR2023/014561
(87) International publication number: WO 2024/071869

(57) **Abstract**

The present invention relates to a battery cell and a structure of a battery module including the battery cell capable of preventing heat from the propagating to neighboring battery cells in case of ignition and guiding the venting downward. The battery cell includes: an electrode assembly; a pouch accommodating the electrode assembly and having a folded side and three sealed sides; and an electrode lead extending from the electrode assembly and protruding outward from the pouch, the battery cell further including: an insulating, heat-resistant and fire-resistant barrier member having a box shape provided with a slit-type lead hole and one open end, wherein the electrode lead protrudes from the barrier member through the lead hole, and five sides of the battery cell excluding the folded side are covered by the barrier member.

## Description

### [TECHNICAL FIELD]

This application claims the benefit of priority based on Korean Patent Application No. 10-2022-0123603, dated September 28, 2022, entire content disclosed in the document of the patent applications is included as a part of this specification.

The present invention relates to a pouch type battery cell. More specifically, the present invention relates to a pouch type battery cell capable of blocking the propagation of heat and flame and controlling the direction of venting.

### [BACKGROUND ART]

Secondary batteries, which are easy to apply depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured as small and light as possible, rectangular batteries and pouch-type batteries that may be stacked with high integration and have a small weight-to-capacity battery are mainly used as battery cells for medium-to-large battery modules.

FIG.S 1 and 2 are a perspective view and an exploded perspective view illustrating a battery module including a pouch type battery cell, respectively. Referring to FIG.S 1 and 2, a battery module 1 may include a battery cell laminate 11 formed by stacking a plurality of battery cells and a housing 12 that accommodates the battery cell laminate 11.

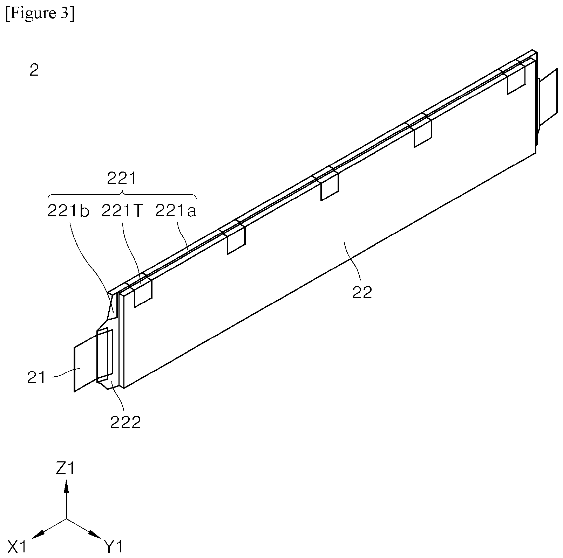

FIG. 3 is a perspective view illustrating a pouch type battery cell. Referring to FIG. 3, a battery cell 2 may include an electrode assembly, a pouch 22 accommodating the electrode assembly, and an electrode lead 21 extending from the electrode assembly and protruding from the pouch 22. The pouch 22 may be formed by folding a pouch sheet made of metal foil material to surround the electrode assembly and sealing three sides except the folded side. Accordingly, the pouch 22 may include a first sealing part 221a on the opposite side of the folded side, and second sealing parts 221b on the remaining two sides. The first sealing part 221a may be resealed by folding and taping the end portion thereof after the first sealing. The pouch sheet may be sealed with the electrode lead 21 interposed therebetween at the second sealing part 221b.

Meanwhile, there is a risk of the battery cell 2 overheating and igniting due to a short circuit. When the battery cell 2 ignites, heat, flame and venting gas generated by vaporization of the electrolyte solution charged inside the pouch 22 may be discharged from the battery cell 2. Additionally, the heat and flame resulting from ignition of the battery cell 2 may spread to other neighboring battery cells 2, causing chain ignition.

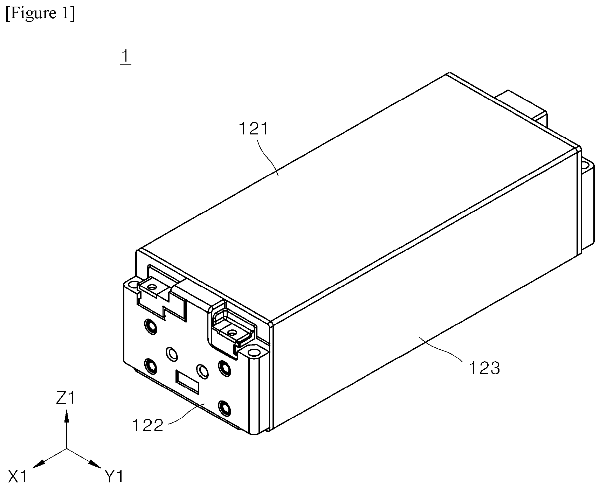

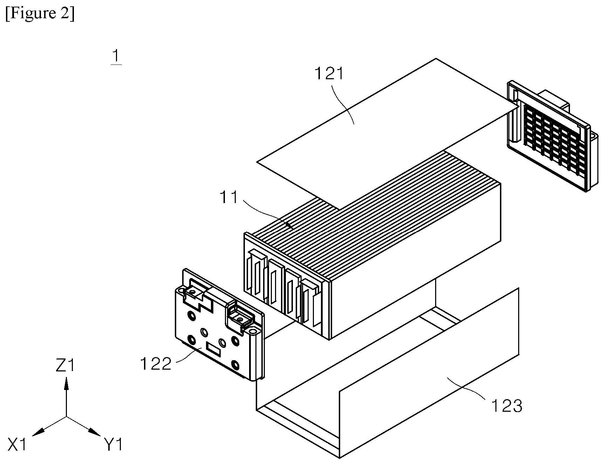

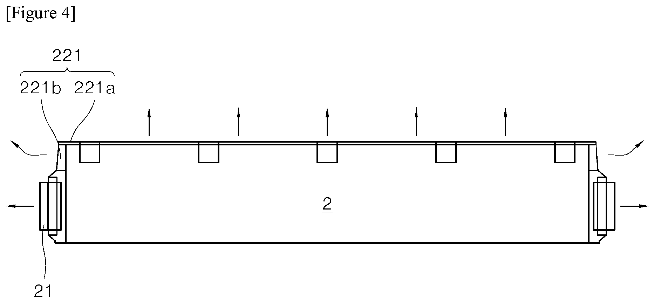

FIG. 4 is a schematic diagram illustrating venting occurring in a pouch type battery cell. Referring to FIG. 4, the heat, flame and venting gas may be discharged from the battery cell 2 mainly through the sealing part 221 of the pouch 22. Meanwhile, referring back to FIGS. 1 and 2, the battery cell 2 may be accommodated in the housing 12 with the folded side facing downward, and thus the heat, flame and venting gas may be mainly discharged in the upward direction of the battery module 1.

However, especially in electric vehicles, the battery module is generally installed on the bottom surface of the vehicle in the form of a battery pack with a plurality of integrated batteries. Therefore, when heat, flame and venting gas are discharged from the battery module in the upward direction, it may pose a great risk to the passengers.

Accordingly, there is a need for a solution at the battery cell or battery module level that is capable of preventing heat propagation between the battery cells and guiding the emission of flame and venting gas in the downward direction.

### [DISCLOSURE]

### [TECHNICAL PROBLEM]

In order to solve the problems of the above-described prior art, it is an object of the present invention to provide a battery cell and a structure of battery module capable of guiding venting in a downward direction during thermal runaway.

It is another object of the present invention to provide a battery cell and a structure of battery module capable of preventing serial ignition by preventing heat propagation between neighboring battery cells.

It is yet another object of the present invention to provide a battery cell and a structure of battery module capable of maintaining the energy density of conventional battery modules while providing safety measures in case of thermal runaway as described above without modifying the design and production equipment of the conventional battery cell and battery module.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery cell including: an electrode assembly; a pouch accommodating the electrode assembly and having a folded side and three sealed sides; and an electrode lead extending from the electrode assembly and protruding outward from the pouch, the battery cell further including: an insulating, heat-resistant and fire-resistant barrier member having a box shape provided with a slit-type lead hole and one open end, wherein length, width and height of the barrier member are X, Y and Z, respectively,; wherein the electrode lead protrudes from the barrier member through the lead hole, and five sides of the battery cell excluding the folded side are covered by the barrier member.

Hereinafter, length, width and height of the barrier member are referred to as X, Y and Z, respectively.

The barrier member is manufactured by folding a barrier sheet in a form of a single development figure into the box shape.

The barrier sheet may include a folder portion and a wing portion.

The folder portion may be rectangular having length and width of X and Y+2Z, respectively.

The folder portion may correspond to one heightwise end surface and two widthwise end surfaces of the battery cell.

The wing portion may be rectangular having length and width of Y and Z. Alternatively, the wing portion may be rectangular having length and width of Z and Y, respectively.

The wing portion may protrude from each of two lengthwise ends of the folder portion.

The wing portion may correspond to two lengthwise end surfaces of the battery cell.

The barrier member may be formed by folding the barrier sheet to surround the battery cell and then joining adjacent but not joined edges to each other by attaching adhesive tape.

The adhesive tape may include a heat-resistant and fire-resistant material.

The barrier sheet may include adhesion wings.

The adhesion wing may protrude from one of adjacent but not joined edges of the barrier sheet and be folded to cover other edges when the barrier sheet may be folded to surround the battery cell.

The barrier member may be in the form of a box with all edges thereof joined to one another.

The barrier member may be manufactured by folding a barrier sheet in the form of a single development figure and fusing adjacent but not joined edges to one another.

The electrode lead may protrude from two lengthwise ends of the battery cell. Here, the lead hole may be provided on each of two lengthwise end surfaces of the barrier member and extend in a heightwise direction to a lower end of each of the two lengthwise end surfaces of the barrier member.

The battery cell may be inserted through an open side of the barrier member to be covered by the barrier member. Here, the electrode lead may be inserted along the lead hole from the lower end of each of the two lengthwise end surfaces of the barrier member.

After the battery cell is inserted into the barrier member, the adhesive tape may be attached to the lower end of each of the two lengthwise end surfaces of the barrier member.

The adhesive tape may include a heat-resistant and fire-resistant material.

A sealing member may be provided in the gap between the lead hole and the electrode lead to seal the gap.

The sealing member may include a heat-resistant and fire-resistant resin.

The present invention also provides a structure of a battery module including: a battery cell laminate manufactured by stacking a plurality of battery cells including the barrier member; and a housing accommodating the battery cell laminate.

The barrier member may include a compressible material. Here, the barrier member may be interposed between the battery cells to absorb swelling and tolerance.

The battery cell laminate may be accommodated in the housing in a manner that an open portion of the barrier member faces a downward direction.

A bottom surface of the housing may be provided with a vent hole open toward the downward direction.

The vent hole opens according to an increase in an inner pressure of the housing.

### [ADVANTTAGEOUS EFFECTS]

The present invention may provide a structure of a battery cell capable of: preventing serial ignition by wrapping the five sides of the battery cell with a barrier member with an open lower end to prevent heat propagation between neighboring battery cells; and guiding venting in a downward direction.

The present invention may also provide a structure of a battery cell capable of: performing venting by maintaining the box shape with the integrally formed barrier member despite a rapid increase in inner pressure when the battery cell ignites.

It is yet advantageous that the present invention may provide a battery cell and a structure of battery module capable of maintaining the energy density of conventional battery modules which can withstand the rapid increase in inner pressure with only a barrier member made of a thin barrier sheet without adding a separate casing member without modifying the design and production equipment of the conventional battery cell and battery module.

The present invention is yet advantageous that tolerance and swelling may be absorbed by using a barrier member of compressible material.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 is a perspective view illustrating a battery module including a pouch type battery cell.
FIG. 2 is an exploded perspective view illustrating a battery module including a pouch type battery cell.
FIG. 3 is a perspective view illustrating a pouch type battery cell.
FIG. 4 is a schematic diagram illustrating venting occurring in a pouch type battery cell.
FIG. 5 is a perspective view illustrating a battery cell including a barrier member according to the present invention.
FIG. 6 is a perspective view illustrating a barrier sheet according to a first embodiment of the present invention.
FIG. 7 is a schematic diagram illustrating a barrier sheet folded to surround a battery cell according to the first embodiment of the present invention.
FIG. 8 is a perspective view illustrating a battery cell including a barrier member according to the first embodiment of the present invention.
FIG. 9 is a perspective view illustrating a barrier sheet according to a second embodiment of the present invention.
FIG. 10 is a schematic diagram illustrating a barrier sheet folded to surround a battery cell according to the second embodiment of the present invention.
FIG. 11 is a perspective view illustrating a battery cell including a barrier member according to the second embodiment of the present invention.
FIG. 12 is a perspective view illustrating a barrier member according to a third embodiment of the present invention.
FIG. 13 is a schematic diagram illustrating a barrier sheet folded to surround a battery cell according to the third embodiment of the present invention.
FIG. 14 is a perspective view illustrating a battery cell including a barrier member according to the third embodiment of the present invention.
FIG. 15 is a perspective view illustrating a barrier member according to a fourth embodiment of the present invention.
FIG. 16 is a schematic diagram illustrating a battery cell being inserted into the barrier member according to the fourth embodiment of the present invention.
FIG. 17 is a perspective view illustrating a battery cell including the barrier member according to the fourth embodiment of the present invention.
FIG. 18 is a schematic diagram illustrating venting occurring in a battery cell provided with a barrier member according to the present invention.
FIG. 19 is a front cross-sectional view illustrating a battery module including a battery cell provided with a barrier member according to the present invention.
FIG. 20 is a lateral cross-sectional view illustrating a battery module including a battery cell provided with a barrier member according to the present invention.

### [DESCRIPTION OF REFERENCE NUMERALS]

1: battery module
   11: battery cell laminate
   12: housing
   121: top plate
   122: end plate
   123: U frame
   124: vent hole
   13: insulating film
   14: thermally conductive resin
2: battery cell
   21: electrode lead
   22: pouch
   221: sealing part
   221a: first sealing part
   221b: second sealing part
   221T: sealing tape
   222: protruding portion
3: barrier member
   31: barrier sheet
   311: folder portion
   312: wing portion
   313: adhesion wing
   32: lead hole
   33: adhesive tape

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

For convenience of description herein, the direction along the longest edge of the battery cell and battery module is referred to as "lengthwise direction X1" of the battery cell, the direction along the normal line of the widest side of the battery cell is referred to as "widthwise direction Y1" of the battery cell, and the direction that intersects both X1 and Y1 is referred to as "heightwise direction Z1" of the battery cell. The lengthwise direction, widthwise direction, and heightwise direction of the battery cell may correspond to those of the battery module, respectively.

Additionally, length X, width Y and height Z of the barrier member refers to dimensions along X1, Y1 and Z2 directions, respectively. Meanwhile, regarding the dimensions of the barrier sheet, the lengthwise direction X2 and widthwise direction Y2 are directions that intersect each other.

Hereinafter, preferred embodiments of the present invention will be described with reference to the accompanying drawings.

FIG. 3 is a perspective view illustrating a pouch type battery cell. With reference to FIG. 3, a battery cell 2 may include: an electrode assembly, a pouch 22 accommodating the electrode assembly; and an electrode lead 21 extending from the electrode assembly and protruding outward from the pouch 22.

The pouch 22 may be formed by folding a pouch sheet made of metal foil material to surround the electrode assembly and sealing three sides except the folded side. Accordingly, the pouch 22 may include a first sealing part 221a on the opposite side of the folded side, and second sealing parts 221b on the remaining two sides.

The first sealing part 221a may be resealed by folding and attaching a sealing tape 221T to the end portion thereof after the first sealing.

The pouch sheet may be sealed with the electrode lead 21 interposed therebetween at the second sealing part 221b.

Meanwhile, there is a risk of the battery cell 2 overheating and igniting due to a short circuit. When the battery cell 2 ignites, heat, flame and venting gas generated by vaporization of the electrolyte solution charged inside the pouch 22 may be discharged from the battery cell 2. Additionally, the heat and flame resulting from ignition of the battery cell 2 may spread to other neighboring battery cells 2, causing chain ignition. An instantaneous increase in the inner pressure of the battery due to the chain of ignition and generation of venting gas may lead to an explosion.

FIG. 4 is a schematic diagram illustrating venting occurring in a pouch type battery cell. Referring to FIG. 4, the heat, flame and venting gas may be discharged from the battery cell 2 mainly through the sealing part 221 of the pouch 22. Meanwhile, the battery cell 2 is generally accommodated in the housing 12 with the sealing part 221 facing upward, forward and backward directions. In such case, there is a risk of the heat, flame, and venting gas generated from the battery cell 2 spreading to other neighboring battery modules within one battery pack. Especially in the case of an electric vehicle, there is a risk of an explosion occurring toward the passengers.

Accordingly, the present invention provides a structure of a battery cell including a barrier member capable of blocking heat propagation and guiding flame and venting gas toward a predetermined direction.

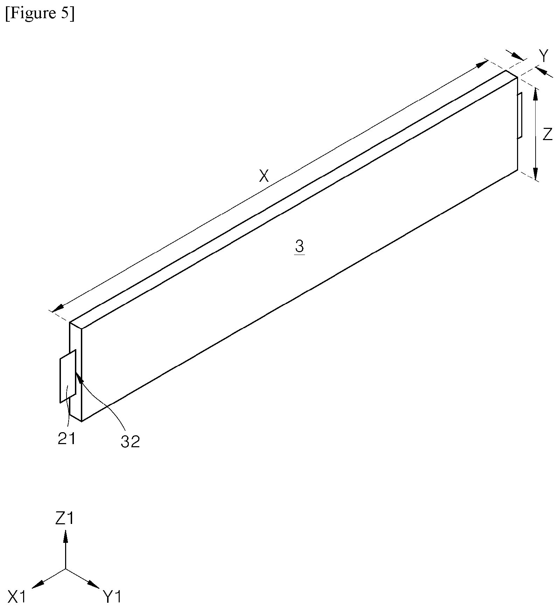

FIG. 5 is a perspective view illustrating a battery cell including a barrier member according to the present invention. With reference to FIG. 5, the battery cell 2 according to the present invention may be provided with a barrier member 3.

The barrier member 3 may include an insulating, heat-resistant and fire-resistant material. For example, the barrier member 3 may include an insulating, heat-resistant and fire-resistant synthetic resin material.

The barrier member 3 may have a box shape provided with one open end. Hereinafter, the length, width, and height of the barrier member 3 are referred to as X, Y and Z, respectively.

The barrier member 3 may be provided with a lead hole 32.

A plurality of lead holes 32 may be provided.

The battery cell 2 may have five sides covered by the barrier member excluding the folded side. Here, the electrode lead 21 may protrude from the barrier member 3 through the lead hole 32.

### [FIRST EMBODIMENT]

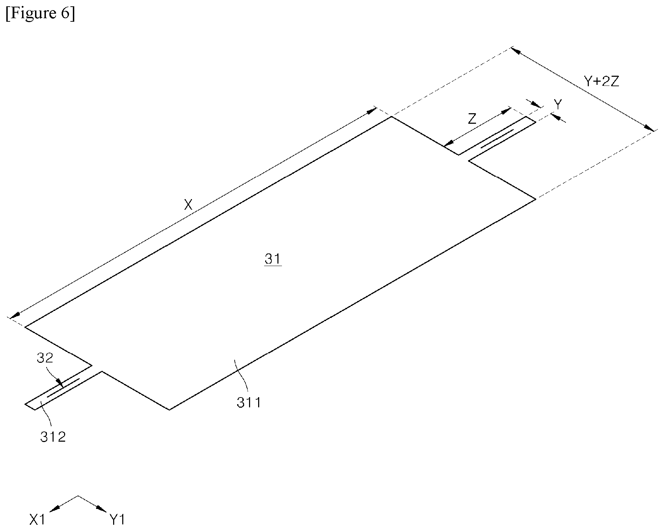

FIG. 6 is a perspective view illustrating a barrier sheet according to a first embodiment of the present invention. Referring to FIG. 6, the barrier member 3 may be manufactured by folding the barrier sheet 31 having a form of single development figure into a box shape.

The barrier sheet 31 may include an insulating, heat-resistant and fire-resistant material. For example, the barrier sheet 31 may include an insulating, heat-resistant and fire-resistant synthetic resin material.

The barrier sheet 31 may include a folder portion 311 and a wing portion 312.

The folder portion 311 according to the first embodiment may be rectangular having length and width of X and Y+2Z, respectively.

The wing portion 312 according to the first embodiment may be rectangular having length and width of Y and Z.

The wing portion 312 may protrude from each of two lengthwise ends of the folder portion 311.

The wing portion 312 may include the lead hole 32.

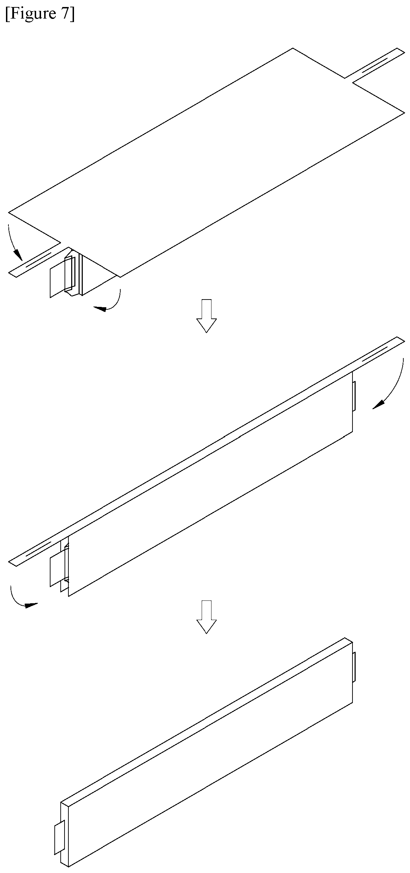

FIG. 7 is a schematic diagram illustrating a barrier sheet folded to surround a battery cell according to the first embodiment of the present invention. Referring to FIG. 7, the barrier sheet 31 according to the first embodiment may form the barrier member 3 surrounding the five sides of the battery cell 2 by folding the folder portion 311 and the wing portion 312 in order.

The folding order of the folder portion 311 and the wing portion 312 is irrelevant. For example, the folder portion 311 and the wing portion 312 may alternately folded one side at a time.

The folder portion 311 may correspond to one heightwise end surface and two widthwise end surfaces of the battery cell 2.

The wing portion 312 may correspond to two lengthwise end surfaces of the battery cell 2. In the process of folding the wing portion 312, the electrode lead 21 may be passed through the lead hole 32. As a result, the electrode lead 21 may protrude outward from the barrier member 3.

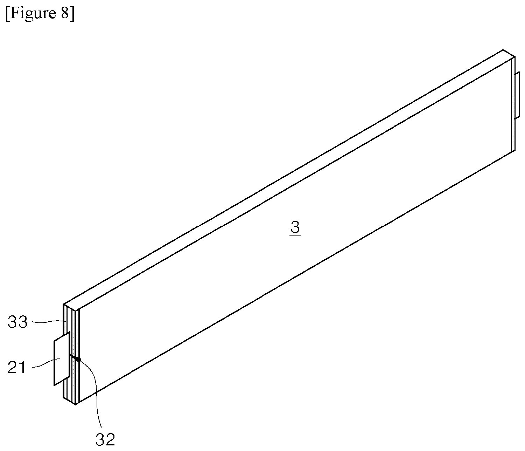

FIG. 8 is a perspective view illustrating a battery cell including a barrier member according to the first embodiment of the present invention. Referring to FIG. 8, the barrier member 3 may be formed by folding the barrier sheet 31 to surround the battery cell 2 and then joining adjacent but not joined edges to each other by attaching adhesive tape 33. That is, the barrier member 3 according to the first embodiment may be formed by joining, with the adhesive tape 33, four edges of the two lengthwise end surfaces and the two widthwise end surfaces that meet one another other.

The adhesive tape 33 may include a heat-resistant and fire-resistant material. For example, the adhesive tape 33 may include a heat-resistant and fire-resistant synthetic resin material.

A sealing member may be provided in the gap between the lead hole 32 and the electrode lead 21 to seal the gap.

The sealing member may include a heat-resistant and fire-resistant resin.

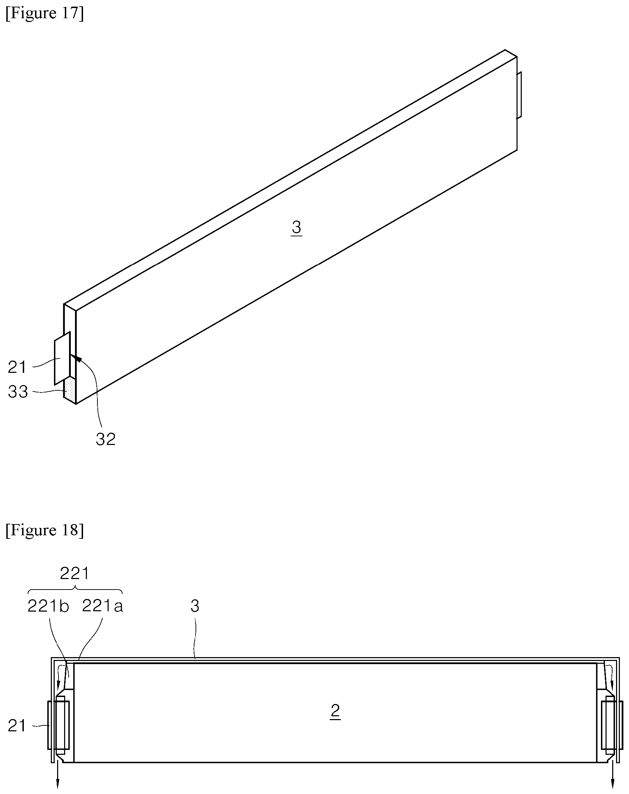

FIG. 18 is a schematic diagram illustrating venting occurring in a battery cell provided with a barrier member according to the present invention. Referring to FIG. 18, the barrier member 3 according to the first embodiment covers all five sides of the battery cell 2 to prevent propagation of heat from the battery cell 2 and directs the flame and venting gas to the opening thereof.

Here, the barrier member 3 according to the first embodiment may be sealed by integrally joining, to one another, the four sides of the surface corresponding to the first sealing part 221a, and, to each other, the two sides of each surface corresponding to the second sealing part 221b by the adhesive tape 33. Accordingly, the portions of the barrier sheet 31 at the front and side of the battery cell 2 may not fall off from the battery cell 2 even when the inner pressure increases rapidly due to ignition.

In addition, since the wing portion 312 according to the first embodiment is folded in the extending direction of the electrode lead 21, the insertion of the electrode lead 21 into the lead hole 32 during the folding process is facilitated.

### [SECOND EMBODIMENT]

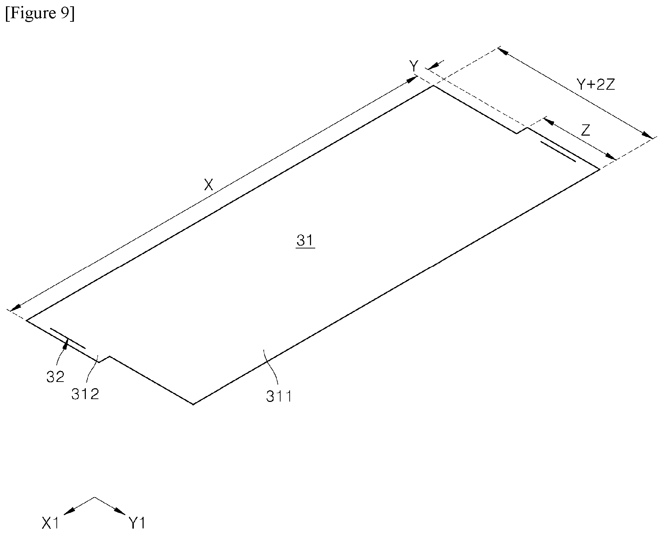

FIG. 9 is a perspective view illustrating a barrier sheet according to a second embodiment of the present invention. Referring to FIG. 9, the barrier sheet 31 according to the second embodiment may include a folder portion 311 and a wing portion 312.

The folder portion 311 according to the second embodiment may be rectangular having length and width of X and Y+2Z, respectively.

The wing portion 312 according to the second embodiment may be rectangular having length and width of Z and Y, respectively.

The wing portion 312 may be provided at and protrude from two lengthwise ends of the folder portion 311 at locations facing each other. Alternatively, the wing portion 312 may be provided at and protrude from two lengthwise ends of the folder portion 311 at staggered locations.

The wing portion 312 may include a lead hole 32.

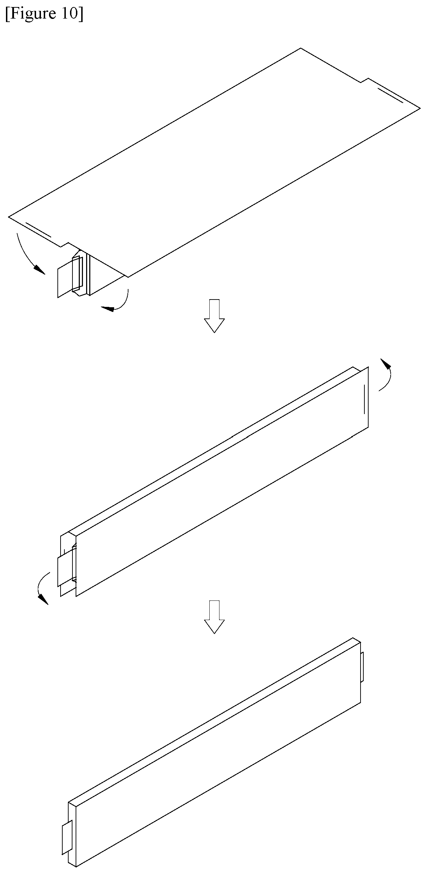

FIG. 10 is a schematic diagram illustrating a barrier sheet folded to surround a battery cell according to the second embodiment of the present invention. Referring to FIG. 10, the barrier sheet 31 according to the second embodiment may form the barrier member 3 surrounding the five sides of the battery cell 2 by folding the folder portion 311 and the wing portion 312 in order.

The folding order of the folder portion 311 and the wing portion 312 is irrelevant. For example, the folder portion 311 and the wing portion 312 may alternately folded one side at a time.

The folder portion 311 may correspond to one heightwise end surface and two widthwise end surfaces of the battery cell 2.

The wing portion 312 may correspond to two lengthwise end surfaces of the battery cell 2. In the process of folding the wing portion 312, the electrode lead 21 may be passed through the lead hole 32. As a result, the electrode lead 21 may protrude outward from the barrier member 3.

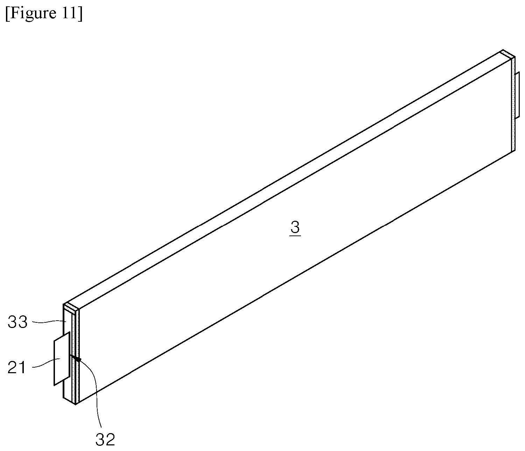

FIG. 11 is a perspective view illustrating a battery cell including a barrier member according to the second embodiment of the present invention. Referring to FIG. 11, the barrier member 3 may be formed by folding the barrier sheet 31 to surround the battery cell 2 and then joining adjacent but not joined edges to each other by attaching adhesive tape 33. That is, the barrier member 3 according to the second embodiment may be formed by joining, with the adhesive tape 33, four edges of the two lengthwise end surfaces, the one widthwise end surface and the one heightwise side surface that meet one another.

The adhesive tape 33 may include a heat-resistant and fire-resistant material. For example, the adhesive tape 33 may include a heat-resistant and fire-resistant synthetic resin material.

A sealing member may be provided in the gap between the lead hole 32 and the electrode lead 21 to seal the gap.

The sealing member may include a heat-resistant and fire-resistant resin.

Referring back to FIG. 18, the barrier member 3 according to the second embodiment covers all five sides of the battery cell 2 to prevent propagation of heat from the battery cell 2 and directs the flame and venting gas to the opening thereof.

Here, the barrier member 3 according to the second embodiment may be sealed by integrally joining, to one another, the four sides of the surface corresponding to the first sealing part 221a, and, to each other, the two sides of each surface corresponding to the second sealing part 221b by the adhesive tape 33. Accordingly, the portions of the barrier sheet 31 at the front and side of the battery cell 2 may not fall off from the battery cell 2 even when the inner pressure increases rapidly due to ignition.

Additionally, the barrier member 3 according to the second embodiment is advantageous in that small amount of adhesive tape 33 is necessary compared to the first embodiment.

### [THIRD EMBODIMENT]

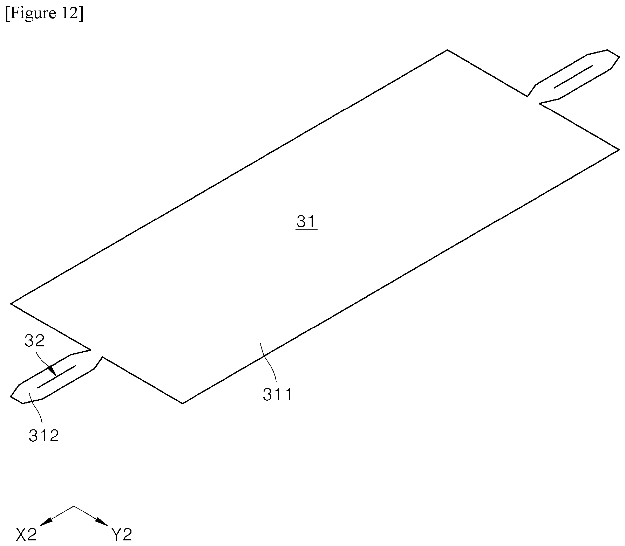

FIG. 12 is a perspective view illustrating a barrier member according to a third embodiment of the present invention. Referring to FIG. 12, the barrier sheet 31 according to the third embodiment additionally includes an adhesion wing 313 compared to the barrier sheet 31 of the first embodiment.

The adhesion wing 313 may be provided to protrude from at least one edge of the wing portion 312.

While the adhesion wing 313 may be provided at the wing portion 312, the adhesion wing 313 may be provided at the folder portion 311. In addition, the adhesion wing 313 may be provided at both of the wing portion 312 and the folder portion 311.

The adhesion wing 313 may have a shape of a tetragon such as a trapezoid, and preferably be provided to protrude over one entire edge of the wing portion 312 and/or the folder portion 311. However, the adhesion wing 313 may have any shape as long as the adhesion wing 313 protrudes.

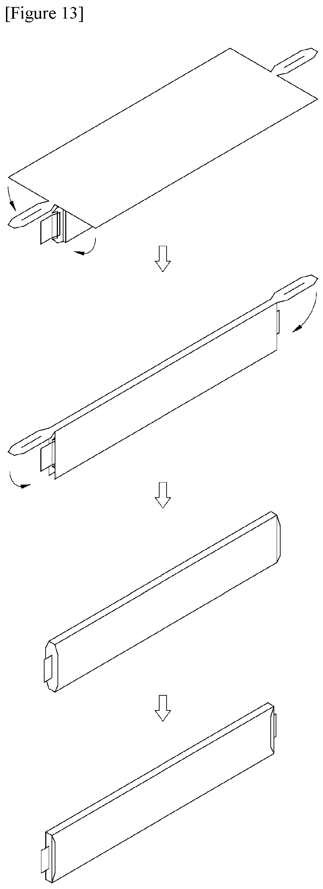

FIG. 13 is a schematic diagram illustrating a barrier sheet folded to surround a battery cell according to the third embodiment of the present invention. Referring to FIG. 13, the barrier sheet 31 according to the third embodiment may be folded to surround the battery cell 2 similar t to the first embodiment.

Here, when the barrier sheet 31 is folded to surround the battery cell 2, the adhesion wing 313 protruding from one of adjacent but not joined edges may be folded and bonded to cover other edges.

The adhesion wing 313, may be bonded to the barrier sheet 31 by adhesiveness thereof or adhesive applied thereto, and may alternately be bonded using an adhesive tape, which will be described later.

The adhesion wing 313 may protrude from one of the neighboring edges toward the other edge and be folded, or may protrude from two edges toward other edges and be folded to be double-bonded.

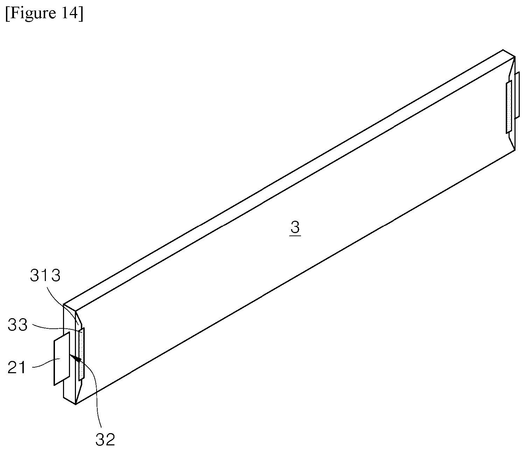

FIG. 14 is a perspective view illustrating a battery cell including a barrier member according to the third embodiment of the present invention. Referring to FIG. 14, the barrier member 3 according to the third embodiment may be manufactured by bonding the adhesion wing 313 in the barrier sheet 31 using the adhesive tape 33 after the adhesion wing 313 is folded in a manner that the barrier sheet 31 forms a box shape.

The adhesive tape 33 may include a heat-resistant and fire-resistant material. For example, the adhesive tape 33 may include a heat-resistant and fire-resistant synthetic resin material.

A sealing member may be provided in the gap between the lead hole 32 and the electrode lead 21 to seal the gap.

The sealing member may include a heat-resistant and fire-resistant resin.

Referring back to FIG. 18, the barrier member 3 according to the second embodiment covers all five sides of the battery cell 2 to prevent propagation of heat from the battery cell 2 and directs the flame and venting gas to the opening thereof.

The barrier member 3 according to the third embodiment is advantageous in that gaps that may exist in the barrier member 3 is minimized and the structural strength thereof is higher due to the adhesion wing 313 compared to the first embodiment.

### [FOURTH EMBODIMENT]

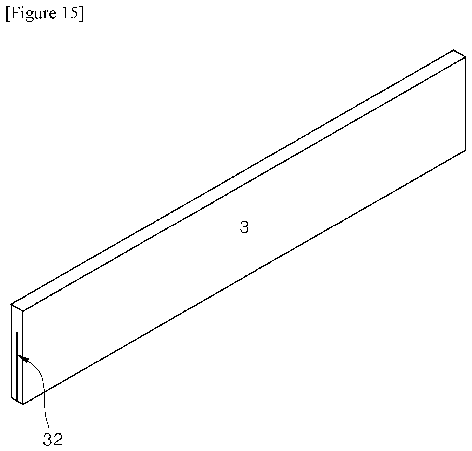

FIG. 15 is a perspective view illustrating a barrier member according to a fourth embodiment of the present invention. Referring to FIG. 15, the barrier member 3 may have a box shape with all edges joined to one another.

The barrier member 3 may be manufactured by folding a barrier sheet 31 in the form of a single development figure and fusing adjacent but not joined edges to one another. However, various methods such as attaching an insulating, heat-resistant and fire-resistant adhesive tape may be used to join the adjacent edges that are not joined to one another,

The barrier sheet 31 may include an insulating, heat-resistant and fire-resistant material. For example, the barrier sheet 31 may include an insulating, heat-resistant and fire-resistant synthetic resin material.

The lead hole 32 may be provided at two lengthwise end surfaces of the barrier member 3. The lead hole 32 may be provided on each of two lengthwise end surfaces of the barrier member 3 and extend in a heightwise direction to a lower end of each of the two lengthwise end surfaces of the barrier member 3.

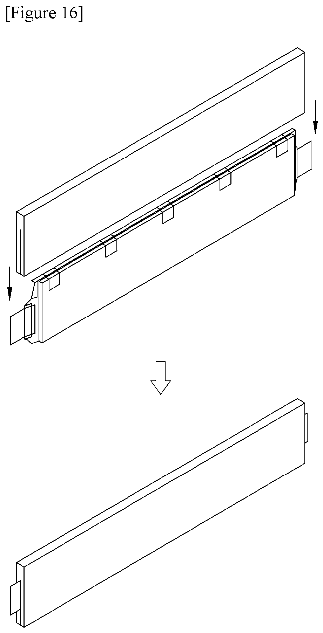

FIG. 16 is a schematic diagram illustrating a battery cell being inserted into the barrier member according to the fourth embodiment of the present invention. Referring to FIG. 16, the battery cell 2 may be inserted through an open side of the barrier member 3 to be covered by the barrier member 3.

Here, the electrode lead 21 may be inserted along the lead hole 32 from the lower end of each of the two lengthwise end surfaces of the barrier member 3.

FIG. 17 is a perspective view illustrating a battery cell including the barrier member according to the fourth embodiment of the present invention. Referring to FIG. 17, the barrier member 3 may be manufactured by attaching an adhesive tape 33 to the lower ends of each of the two lengthwise end surfaces after the battery cell 2 is inserted.

The adhesive tape 33 may include a heat-resistant and fire-resistant material. For example, the adhesive tape 33 may include a heat-resistant and fire-resistant synthetic resin material.

A sealing member may be provided in the gap between the lead hole 32 and the electrode lead 21 to seal the gap.

The sealing member may include a heat-resistant and fire-resistant resin.

Referring back to FIG. 18, the barrier member 3 according to the second embodiment covers all five sides of the battery cell 2 to prevent propagation of heat from the battery cell 2 and directs the flame and venting gas to the opening thereof.

Since the barrier member 3 according to the fourth embodiment surrounds the battery cell 2 with all the edges of the five sides except the open side at the bottom being joined and sealed, the heat, flame and venting gas generated in the battery cell 2 may be guided toward the downward direction without leaking.

Additionally, the barrier member 3 according to the second embodiment is advantageous in that very small amount of adhesive tape 33 is necessary compared to the first embodiment.

The present invention also provides a structure of a battery module including the battery cell including the barrier member described above. Apparently, the battery cells of the first to fourth embodiments may also constitute a battery module having a structure described later.

First, the structure of a general battery module will be described with reference to the drawings.

FIG.S 1 and 2 are a perspective view and an exploded perspective view illustrating a battery module including a pouch type battery cell, respectively. Referring to FIGS. 1 and 2, a battery module including a pouch type battery cell may include: a battery cell laminate formed by stacking a plurality of battery cells 2; and a housing 12 that accommodates the battery cell laminate 11.

The battery cell laminate 11 may be formed by stacking a plurality of battery cells 2 in a widthwise direction.

The battery cell laminate 11 may be formed by stacking a plurality of battery cells 2 in a widthwise direction with a compressible pad interposed therebetween. The compressible pad is capable of absorbing tolerance and swelling (a phenomenon in which gas fills the pouch of the battery cell and causes the pouch to swell) by being compression molded to fit the shape of the battery cell 2.

The housing 12 may include: a U frame 123 having a 'U' shape with open upper end and two open lengthwise ends (front and rear); an end plate 122 that covers the front and rear of the U frame 123; and a top plate 121 covering the open upper end.

The battery cell laminate 11 may be accommodated in the housing in a manner that the folded side of the battery cell 2 is directed downward, i.e., the first sealing part 221a faces upward.

An insulating film may be provided between the housing 12 and the battery cell laminate 11 to insulate the battery cell laminate 11 from the outside.

A thermally conductive resin that can transfer heat to the outside may be provided on the bottom surface of the U frame 123 to cool the heat generated from the battery cell laminate 11.

Hereinafter, a structure of a battery module according to preferred embodiments of the present invention will be described with reference to the drawings.

### [FIFTH EMBODIMENT]

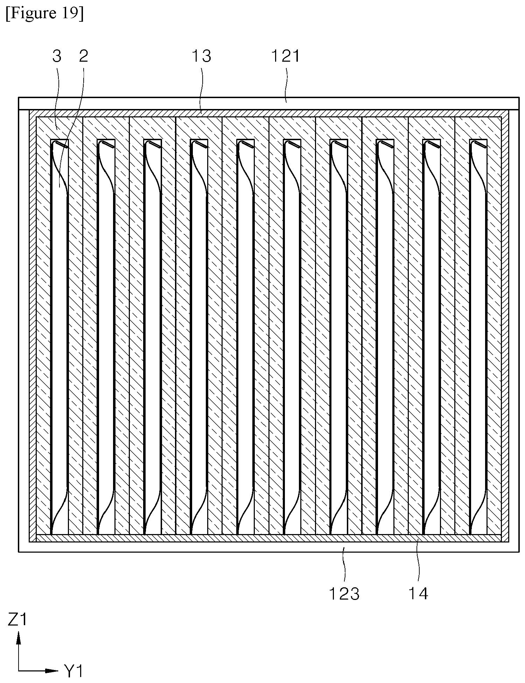

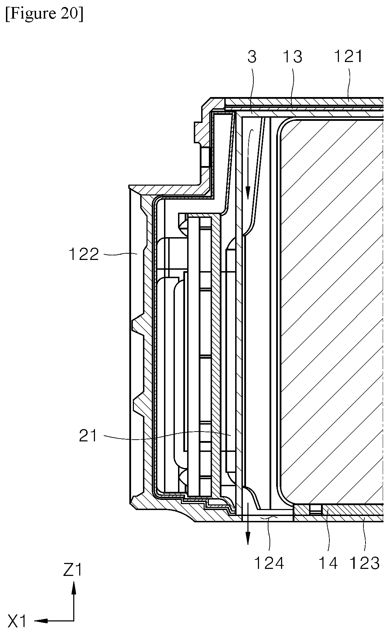

FIGS. 19 and 20 are a front cross-sectional view and a lateral cross-sectional view illustrating a battery module including a battery cell provided with a barrier member according to the present invention, respectively. Referring to FIGS. 19 and 20, the battery cells 2 may be stacked on one another in a widthwise direction while surrounded by the barrier member 3 to form the battery cell laminate 11.

The battery cells 2 may be stacked with the open sides of the barrier members 3 facing the same direction to form the battery cell laminate 11.

The barrier member 3 may include a compressible material. As a result, the barrier member 3 may have the function of absorbing tolerance and swelling similar to the compressible pad. In such case, the barrier member 3 simply occupies the space occupied by the compressible pad such that the manufacture the battery module 1 according to the fifth embodiment is possible by only slightly modifying the manufacturing process of the battery cell laminate 11 of the battery module using the compressible pad without changing the design or production equipment.

This is possible because the barrier member 3 is able to maintain its box-shaped structure against strong inner pressure even though it is made of a thin barrier sheet 31 due to its unique integrated structure. Therefore, it is advantageous that the present invention may be embodied simply by replacing the conventional compressible pad with the barrier member 3 without adding separate rigid casing, etc.

Another advantage of the embodiment is that, when the battery module 1 can be manufactured without adding a separate member as described above, the number of battery cells 2 that may be accommodated in a single battery module 1 and energy capacity relative to volume, i.e. energy density do not decrease compared to conventional battery modules.

The battery cell laminate 11 may be accommodated in the housing 12 in a manner that the folded side of the battery cell 2 and the open side of the barrier member 3 face downward direction.

The insulating film 13 may be interposed between the battery cell laminate 11 and a top plate 121 and between the battery cell laminate 11 and two sidewalls of the housing 12.

A thermally conductive resin 14 may be interposed between the battery cell laminate 11 and a bottom surface of the housing 12.

A vent hole 124 open toward downward direction may be provided on the bottom surface of the battery module 1. When the battery cell 2 is ignited, the flame and venting gas guided downward by the barrier member 3 may be discharged to the outside of the battery module 1 through the vent hole 124. Accordingly, the flame and venting gas caused by the ignition of the battery cell 2 from battery cell level to battery module level may be guided in a downward direction.

In such case, since the barrier member 3 can withstand an instantaneous increase in inner pressure of each the battery cell 2 caused by the venting gas, and the barrier member 3 is made of a compressible material, the pressure applied to the housing by rapidly increasing inner pressure may be reduced. For example, when venting is guided in the downward direction only at battery module level, it is highly likely that the flame generated from the battery cell 2 may damage the insulating film 13 and the thermally conductive resin 14.

In particular, the end plate 122 may be provided with a terminal mainly for electrically connecting the battery cell laminate 11 to the outside such that the battery module 1 may be connected to other neighboring battery modules to form a battery pack. Since guiding the venting at the battery module level results in the end plate 122 being heated and exposed to flame and venting gas, it is very difficult to prevent heat propagation to neighboring battery modules. Therefore, there is a risk that chain ignition between battery modules within the battery pack may occur such that the ignition of the battery cell 2 may lead to a larger explosion. According to the present invention, it is possible to prevent serial ignition between battery modules as described above.

In addition, since the barrier member 3 is capable of preventing heat propagation between the battery cells 2, excessive thermal runaway due to serial ignition of the battery cells 2 may be fundamentally prevented.

The vent hole 124 may be opened as the inner pressure of the housing 12 increases. Additionally, the vent hole 124 may be closed as the inner pressure of the housing 12 decreases. That is, the vent hole 124 may be open and closed according to an increase or decrease in the inner pressure of the housing 12.

The above-described embodiments should be understood in all respects as illustrative and not restrictive, and the scope of the present invention will be represented by the claims to be described later rather than the detailed description given above. In addition, all changes and modifications derived from the equivalent concept as well as the meaning and scope of the patent claims to be described later should be construed as being included in the scope of the present invention.

As described above, the present invention has been described with reference to the illustrative drawings, but the present invention is not limited to the embodiments and drawings disclosed herein, and various modifications may be made by those skilled in the art within the scope of the technical idea of the present invention. It is obvious that transformation may occur. In addition, although the operational effects according to the configuration of the present invention were not explicitly described and explained while explaining the embodiments of the present invention above, it is natural that the predictable effects due to the configuration should also be recognized.

## Claims

1. A battery cell comprising:
an electrode assembly;
a pouch accommodating the electrode assembly and having a folded side and three sealed sides; and
an electrode lead extending from the electrode assembly and protruding outward from the pouch,
the battery cell further comprising:
an insulating, heat-resistant and fire-resistant barrier member having a box shape provided with a slit-type lead hole and one open end, wherein length, width and height of the barrier member are X, Y and Z, respectively,;
wherein the electrode lead protrudes from the barrier member through the lead hole, and five sides of the battery cell excluding the folded side are covered by the barrier member.

2. The battery module of claim 1, wherein the barrier member is manufactured by folding a barrier sheet having a form of a single development figure.

3. The battery module of claim 2, wherein the barrier sheet comprises:
a rectangular folder portion having length and width of X and Y+2Z, respectively; and
a rectangular wing portion protruding from each of two lengthwise ends of the folder portion, the wing portion provided with the lead hole and having length and width of Y and Z, respectively,
wherein the folder portion corresponds to one heightwise end surface and two widthwise end surfaces of the battery cell, and
the wing portion corresponds to two lengthwise end surfaces of the battery cell.

4. The battery module of claim 2, wherein the barrier sheet comprises:
a rectangular folder portion having length and width of X and Y+2Z, respectively; and
a rectangular wing portion protruding from each of two lengthwise ends of the folder portion, the wing portion provided with the lead hole and having length and width of Z and Y, respectively,
wherein the folder portion corresponds to one heightwise end surface and two widthwise end surfaces of the battery cell, and
the wing portion corresponds to two lengthwise end surfaces of the battery cell.

5. The battery module of claim 2, wherein the barrier member is formed by folding the barrier sheet to surround the battery cell and then joining adjacent but not joined edges to each other by attaching adhesive tape.

6. The battery module of claim 5, wherein the adhesive tape comprises heat-resistant and fire-resistant material.

7. The battery module of claim 2, wherein the barrier sheet comprises an adhesion wing protruding from one of adjacent but not joined edges of the barrier sheet and folded to cover other edges when the barrier sheet is folded to surround the battery cell.

8. The battery module of claim 2, further comprising: a sealing member sealing a gap between the lead hole and the electrode lead.

9. The battery module of claim 8, wherein the sealing member comprises a heat-resistant and fire-resistant resin.

10. The battery module of claim 2, wherein the barrier member has a box shape having all edges thereof joined to one another.

11. The battery module of claim 10, wherein the barrier member is manufactured by folding a barrier sheet in the form of a single development figure and fusing adjacent but not joined edges to one another.

12. The battery module of claim 10, wherein the electrode lead protrudes from two lengthwise end surfaces of the battery cell, and
the lead hole is provided on each of two lengthwise end surfaces of the barrier member and extends in a heightwise direction to a lower end of each of the two lengthwise end surfaces of the barrier member.

13. The battery module of claim 12, wherein the battery cell is inserted through an open side of the barrier member to be covered by the barrier member, and
an adhesive tape is attached to the lower end of each of the two lengthwise end surfaces of the barrier member.

14. The battery module of claim 13, wherein the adhesive tape comprises heat-resistant and fire-resistant material.

15. The battery module of claim 10, wherein further comprising: a sealing member sealing a gap between the lead hole and the electrode lead.

16. A battery module comprising: a battery cell laminate manufactured by stacking a plurality of battery cells of one of claims 1 to 15; and a housing accommodating the battery cell laminate.

17. The battery module of claim 16, wherein a barrier member comprises a compressible material.

18. The battery module of claim 16, wherein the battery cell laminate is accommodated in the housing in a manner that an open portion of a barrier member faces a downward direction.

19. The battery module of claim 18, wherein a bottom surface of the housing is provided with a vent hole open toward the downward direction.

20. The battery module of claim 19, wherein the vent hole opens according to an increase in an inner pressure of the housing.
